# EUROPEAN PATENT APPLICATION

(11) **EP 4 101 534 A1**
(43) Date of publication of application: **14.12.2022**
(21) Application number: 21178897.1
(22) Date of filing: 10.06.2021
(51) Int. Cl.: B01L 3/00, G01N 15/04, B01D 21/00, B01D 21/28, B01D 43/00

(54) **METHODS AND SYSTEMS FOR PERFORMING ACOUSTICALLY ENHANCED SEDIMENTATION**

(71) Applicant: AcouSort AB, 223 81 Lund (SE)
(72) Inventor: LILJENBERG, Marcus, 224 60 LUND (SE); EVANDER, Mikael, 244 63 FURULUND (SE)
(74) Representative: Brann AB

(57) **Abstract**

A method of performing acoustically enhanced sedimentation in a sample of a suspension comprising particles and a fluid is provided. The method comprises the steps of: i. introducing a volume of the sample into an accumulation zone of a microfluidic cavity; ii performing the substeps of: a. during a first time period: subjecting the volume to an acoustic standing wave configured to cause the particles in the volume to accumulate in at least a first region of the volume; b. during a second time period: subjecting the volume to a gravitational field affecting the particles and the fluid so that the particles accumulated in the at least one first region sediment in a first direction in relation to the direction of the gravitational field, thereby removing particles from the volume; and iii. moving the volume in a second direction opposite the first direction by introducing a subsequent volume of the sample into the accumulation zone of the microfluidic cavity. An acoustofluidic system is also provided.

## Description

### Technical field

The technology proposed herein relates generally to the field of acoustofluidics in which ultrasound is used to actuate waves in liquids and suspensions for interacting with the liquids or different types of particles in the liquids and suspensions, for example for performing inter alia separation and sorting of the particles or mixing of liquids or suspensions. The technology proposed herein particularly relates to methods and systems for performing acoustically enhanced sedimentation in a sample of a suspension.

### Background

Acoustofluidics generally refer to using sound to affect liquids or particles in liquids or suspensions. Acoustofluidics used to affect particles is generally termed acoustophoresis. Acoustophoresis has been used inter alia for separating different types of cells in suspensions such as separating blood cells from plasma or for separating and collecting circulating tumor cells from blood. Generally, an acoustofluidic device comprises a microfluidic cavity such as a microfluidic flow channel fashioned in a substrate. The suspension is pumped through the flow channel under laminar flow conditions, or alternatively is stationary in the flow channel. An ultrasound transducer, particularly a piezoelectric element, is attached to the substrate and actuated to produce an ultrasonic vibration in the substrate in the range of about 1-10 MHz. Provided that the dimensions, in particular height or width, of the flow channel is properly matched with the frequency of the ultrasonic vibration, an acoustic standing wave may appear in the channel. This acoustic standing wave exerts a force on the particles in the suspension dependent on the acoustic contrast of each individual particle as determined by the properties of each particle relative to those of the suspending liquid in the suspension, and thus particles will be forced to move, dependent on the acoustic contrast, towards or away from the pressure node(s) of the standing wave. Applications include, as stated above, separation, sorting, trapping and other manipulations of the particles. More general applications of acoustofluidics involve mixing of liquids. Generally, an acoustofluidic device can be used of both general acoustofluidic operations such as mixing of liquid, as well as for acoustophoretic operations such as manipulating particles.

A number of well-known medical analysis systems and methods often require access to blood plasma for analysis. These systems and method therefore require that any whole blood sample, e.g., from a patient, is pretreated so that the formed elements of the whole blood are separated from the plasma, before the plasma can be analyzed. Such systems inter alia include analysis systems for determining the level of plasma proteins.

Centrifugation of whole blood to create plasma is the most widely used method of plasma generation in clinical medicine and in laboratories. It is a method that can be easily reproduced and standardized, while capable of handling large volumes of plasma easily. Most laboratories today are equipped with a centrifuge capable of performing a typical protocol for plasma generation, such as 1500 - 2000 g for 10 minutes. Centrifugation is however generally not suited for use in a point of care setting, for example by being performed by a diagnostic instrument.

While acoustofluidics and acoustophoresis *per* se can be used to separate whole blood into formed elements and plasma, general implementations of these techniques rely on combining a number of separate components such as pumps, acoustofluidic devices, function generators, tubing, microscopes, in order to carry out the acoustofluidic or acoustophoretic techniques. Such setups are generally not only difficult to integrate in existing analysis and/or medical systems, in addition they will generally have significant internal volumes, due to the distributed arrangement of separate components, so that the volume of the sample must be large.

Accordingly, there is still a need for methods and systems for efficiently treating suspensions, such as blood, in order to produce fluid, such as plasma. There is further a need for implementing and integrating acoustofluidics and acoustophoresis in other well-known analysis and/or medical systems and methods.

### Objects

A primary object of the technology proposed herein is to provide a method of performing acoustically enhanced sedimentation in a sample so as to efficiently produce fluid from a suspension comprising fluid and particles.

A further object of the technology proposed herein to provide an acoustofluidic system for performing acoustically enhanced sedimentation in a sample so as to efficiently produce fluid from a suspension comprising fluid and particles.

### Summary

At least one of the abovementioned objects or at least one of the further objects which will become evident from the below description, are according to a first aspect of the technology proposed herein achieved by a method of performing acoustically enhanced sedimentation in a sample of a suspension comprising particles and a fluid, the method comprising the steps of:
i. introducing a volume of the sample into an accumulation zone of a microfluidic cavity;
ii. performing the substeps of:
   a. during a first time period: subjecting the volume to an acoustic standing wave configured to cause the particles in the volume to accumulate in at least a first region of the volume;
   b. during a second time period: subjecting the volume to a gravitational field affecting the particles and the fluid so that the particles accumulated in the at least one first region sediment in a first direction in relation to the direction of the gravitational field, thereby removing particles from the volume; and
iii. moving the volume in a second direction opposite the first direction by introducing a subsequent volume of the sample into the accumulation zone of the microfluidic cavity.

At least one of the abovementioned objects or at least one of the further objects which will become evident from the below description, is further, according to a second aspect of the technology proposed herein, achieved by an acoustofluidic system for performing acoustically enhanced sedimentation in a sample of a suspension comprising particles and a fluid, the system comprising:
- a substrate in which a microfluidic cavity is positioned, the microfluidic cavity having an inlet and an outlet arranged spaced apart in the direction of the gravitational field,
- an ultrasound transducer in acoustic contact with at least a part of one surface of the substrate,
- a drive circuit operationally connected to the ultrasound transducer and configured to actuate the ultrasound transducer for providing an acoustic standing wave in the microfluidic cavity
- a pump fluidically connected to the inlet and configured to introduce a volume of the sample into the microfluidic cavity, and
- a control circuit operationally connected to the drive circuit and the pump, the control circuit being configured to:
   i. activate the pump to introduce a volume of the sample into an accumulation zone of the microfluidic cavity;
   ii. control the drive circuit so as to:
      a. during a first time period: activate the drive circuit for subjecting the volume to an acoustic standing wave configured to cause the particles in the volume to accumulate in at least a first region of the volume;
      b. during a second time period: de-activate the drive circuit for subjecting the volume to a gravitational field affecting the particles and the fluid so that the particles accumulated in the at least one first region sediment in a first direction in relation to the direction of the gravitational field, thereby removing particles from the volume; and
   iii. activate the pump for moving the volume in a second direction opposite the first direction by introducing a subsequent volume of the sample into the accumulation zone of the microfluidic cavity.

Accordingly, the technology proposed herein is based on the realization by the present inventors that acoustophoresis can be used to accumulate particles in order to facilitate sedimentation of the particles, combined with the realization that applying acoustophoresis to successive volumes of a sample of a suspension allows the formation of successive volumes of fluid more or less free of particles, which volumes combine to form a combined larger volume of fluid that can be analysed. As the acoustic standing wave is only applied to one volume of the sample at a time, the power requirements for providing the acoustic standing wave are low, hence making the method and corresponding system suitable for integration in analysis and/or medical systems and methods. Further, the low power requirements limit heating of the sample which could damage the sample and/or affect later analysis. The method and system further provide for processing very small sample volumes in order to produce very small volumes of fluid, thus making the method and system suitable for miniaturization, as well as requiring very small internal volumes so as to allow the total volume of the sample to be reduced.
The method may alternatively be considered a method of producing or separating fluid from a suspension comprising particles and the fluid.
The acoustofluidic system may be considered an acoustofluidic system for producing or separating fluid from a suspension comprising particles and the fluid.
Sedimentation is herein to be understood as encompassing a process where particles move through a fluid due to a gravitational field and due to different density between the particles and the fluid. Sedimentation thus encompasses flotation.
The sample may comprise all or part of the suspension.

The suspension may for example comprise whole blood, intracellular fluid, interstitial fluid, synovial fluid, cerebrospinal fluid, peritoneal fluid, urine, cell cultures. Preferably the suspension is whole blood, and the sample is a whole blood sample.
The particles may comprise one or more of red blood cells, white blood cells, platelets, cancer cells, bacterial cells, viruses, yeast cells, dust particles, silica particles and polymer particles.
The fluid may be plasma, water, urine, yeast cell broth, cell culture medium, saline solutions, phosphate buffered saline, intracellular fluid or interstitial fluid, milk plasma.

The steps are preferably performed in the order (i), (ii), (iii) .

Introducing a volume of the sample into an accumulation zone of a microfluidic cavity corresponds to introducing a volume of the sample into at least a portion or part of the microfluidic cavity. The volume may fill the microfluidic cavity, however, typically the volume only fills a portion or part of the microfluidic cavity.
The volume may be considered a partial volume of the sample. The size of the volume may depend on the volume of the microfluidic cavity. The volume of the sample may thus be less than 500 µl, such as less than 100 µl, such as less than 50 µl, preferably less than 30 µl, more preferably less than 10 µl, such as less than 5 µl.
Alternatively, the volume of the sample may be the same or less than the volume of the microfluidic cavity. Accordingly, the volume of the sample may be up to 1/2, such as up to 1/4, such as up to 1/8, such as up to 1/16, such as up to 1/32, such as up to 1/64 of the volume of the microfluidic cavity.
The accumulation zone is the volume or part of the microfluidic cavity in which the acoustic standing wave is provided. The accumulation zone may thus correspond to the whole or part of the microfluidic cavity depending on the extent of the acoustic standing wave. Typically, the acoustic standing wave is only present in a portion, corresponding to the accumulation zone, of the microfluidic cavity. Where the microfluidic cavity has a wall, and where the acoustic standing wave is directed perpendicularly to this wall, the accumulation zone typically corresponds to the volume of the microfluidic cavity whose wall is in contact with an ultrasound transducer configured to provide the acoustic standing wave. During step (i) the volume of the sample is preferably introduced until the volume of the sample has passed along and reached the end of such an ultrasound transducer. Introducing a volume of the sample into an accumulation zone of a microfluidic cavity thus encompasses introducing a volume of the sample into a portion of a microfluidic cavity, in which portion an acoustic standing wave can be provided.
Accordingly, the volume of the sample corresponds to the volume of the accumulation zone.

The volume may be introduced using a pump fluidically connected to an inlet of the microfluidic cavity. In the context of the technology proposed herein, a pump encompasses any device capable to move the volume so as to introduce it into the microfluidic cavity. A pump may thus comprise any of a pump, a syringe, capillary action, pressurized gas, and pressurized liquid.
The pump may be configured to introduce a volume of the sample into the accumulation zone of the microfluidic cavity by comprising or being connected to a container containing the sample.
In the acoustofluidic system, the control circuit activates the pump to introduce the volume of the sample.
The microfluidic cavity may have a volume of 5 to 500 ul, such as 10 to 500 µl, such as 10 to 250 µl, such as 25 to 250 µl, such as 25 to 100 µl, such as 25 to 75 µl, such as 40 to 60 µl, such as 50 to 60 µl, such as 55 µl.
The microfluidic cavity may be provided or positioned in a substrate. The substrate may be made from a number of different materials including glass, metal, ceramics, and silicon. It is further contemplated within the context of the technology proposed herein that the substrate may be made from polymeric materials, in particular plastics such as cyclic olefin copolymer (COP), cyclic olefin polymers (COC), polycarbonate (PC), polypropylene (PP) poly(methyl methacrylate) (PMMA), polystyrene (PS), and Polyether Ether Ketone (PEEK).
Typically, the substrate has a bottom surface, an opposing top surface, two opposing side surfaces, and two opposing end surfaces. The length, height and width of the substrate are typically in the range of 10-100 mm (length) 0.5 to 3 mm (height), and 1-10 mm (width).
The substrate preferably comprises a capillary, preferably a glass capillary.
The microfluidic cavity may run along at least a part of the substrate and may be provided with inlets and outlets at its opposite ends. The microfluidic cavity may in particular comprise a microfluidic channel. The microfluidic cavity may have a floor, a ceiling, and two opposing side walls.
Typically, the microfluidic cavity will have a rectangular or substantially rectangular cross section, although other shapes of cross section are possible. The width of the microfluidic cavity is typically from 0.1 to 5 mm and the height 0.05 to 5 mm, depending on the size of any particle that is to pass through the microfluidic cavity.
The microfluidic cavity is provided with at least one inlet and at least one outlet arranged spaced apart in the direction of the gravitational field. The second direction should extend from the inlet to the outlet.
The duration of the second time period is dependent on the time needed for the accumulated particles to sediment through the volume. It may therefore be preferable to use a microfluidic cavity having a large cross-sectional area in a cross-sectional plane perpendicular to the direction of the gravitational field. For a given volume of sample to be processed in step (ii), such a configuration minimizes the distance that the accumulated particles have to sediment, and hence minimizes the duration of the second time period. Alternatively, a microfluidic cavity having a small cross-sectional area in a cross-sectional plane perpendicular to the direction of the gravitational field requires a longer second time period but makes it easier to collect the fluid. Accordingly, it may be preferred to configure the microfluidic cavity such that its length dimension is arranged along the direction of the gravitational field, and so that the ratio between height and length is from 1:50 to 1:5, such as 1:25 to 1:10, and the ratio between width and length is 1:25 to 1:5, such as 1:15 to 1:10.

Preferably the width the microfluidic cavity is up to 4 mm and the height of microfluidic cavity can be up to 2 mm. More preferably the microfluidic cavity is a channel in a capillary, the channel having a rectangular cross section with width of 1-3 mm, such as 1.5 to 2.5 mm, a height of 0.5 to 2 mm, such as 0.8 to 1.5 mm, and a length of 10 to 50 mm, such as 20 to 40 mm, such as 20 to 30 mm.

The substrate is typically formed in one piece. However, the substrate may be fashioned from two parts so that the cavity may be easily implemented as a trough or groove in one of the parts whereafter the other part is placed as a lid to seal the trough or groove to form the cavity.
The cavity may further have different dimensions at different positions along its length. The cavity may further branch into plural cavities, or plural cavities may join into one cavity, at different positions along its length.

The first time period may be from 1 second to 60 seconds, such as from 10 seconds to 50 seconds, such as from 20 second to 40 seconds, such as 30 seconds.

Subjecting the volume to an acoustic standing wave corresponds to providing at least one acoustic standing wave in the volume. This may comprise transferring ultrasound vibrations to the substrate in which the microfluidic cavity is provided. The acoustic standing wave is preferably provided in the whole of the volume, however subjecting the volume to an acoustic standing wave encompasses subjecting a part of the volume to an acoustic standing wave.
Preferably the ultrasound vibrations are provided by an ultrasound transducer in acoustic contact with at least one part of one surface of the substrate. The ultrasound transducer may be in acoustic contact with the substrate by being in direct physical contact, or by being in indirect physical contact via for example an acoustically conducting material, such as an electrode or electrode layer that is used to conduct an electric signal to the ultrasound transducer.
The ultrasound transducer may be provided in acoustic contact with a majority, such as all, of a surface of the substrate. Alternatively, the ultrasound transducer is provided in acoustic contact with a part of a surface.
The positions and extensions of the ultrasound transducer may be advantageously configured so as to allow the microfluidic cavity to be observed or analyzed through a surface of the substrate.
Typically, the ultrasound transducer comprises a piezoelectric or electrostrictive material which is caused to vibrate by an electric drive signal. However, it is further contemplated within the context of the technology proposed herein that also other types of ultrasound transducer materials, such as magnetostrictive materials (which change dimension in magnetic fields) and thermoacoustic materials (which emit acoustic vibrations in response to temperature changes) can be used. It is further contemplated within the context of the technology proposed herein that the ultrasound transducers could employ an electrostatic function, whereby vibrations are caused by varying the electrostatic attraction and/or repulsion between electrodes of the ultrasound transducer.

The substrate and the ultrasound transducer may be considered an acoustofluidic device, acoustophoretic device, acoustophoresis chip, or acoustophoresis device.
The ultrasound transducer may be actuated by providing an electric signal, such as a sine or square wave signal to the ultrasound transducer in order to force the ultrasound transducer to vibrate at or near the frequency of the actuation signal. Actuating the ultrasound transducer at a frequency f is further to be understood as encompassing supplying ultrasound energy at the frequency f to the substrate.
The frequency f is typically in the range of 0.1 to 20 MHz. The voltage of the signal (peak-to-peak) may be 1 - 30 Vpp, such as 10-20V Vpp. The higher the voltage, the stronger the acoustofluidic effect. The maximum voltage used is limited by the breakdown voltage V/pm thickness of the piezoelectric or electrostrictive material used. The breakdown voltages depend on the piezoelectric or electrostrictive materials used and can generally be in the range of 0.5 to 20, such as 10 to 20 Vpp/pm. The maximum voltage is also limited by the heating of the volume during actuation, so as to preferably avoid that the sample, fluid and/or particles break down.
The signal may be provided by a drive circuit such as a function generator. The drive circuit may be separate from the acoustofluidic device.
The drive circuit may be operationally connected to the ultrasound transducer by electrical leads.
The drive circuit may be configured to actuate the ultrasound transducer, for providing an acoustic standing wave in the microfluidic cavity, by comprising a function generator providing an electrical drive signal.
The acoustic standing wave may correspond to a one, two, or three-dimensional volume resonance in the substrate and/or in the microfluidic cavity.
The acoustic standing wave may be configured to cause the particles in the volume to accumulate in at least a first region of the volume by having a frequency corresponding to a resonance frequency of the microfluidic cavity. If the particles have higher acoustic contrast than the fluid, e.g., if the particles have higher density and lower compressibility than the fluid, then the particles are accumulated at the nodes of the acoustic standing wave. Conversely, if the particles have lower acoustic contrast, then they are accumulated in the antinodes of the acoustic standing wave.
The resonance frequency of the acoustic standing wave is dependent on the dimensions and speed of sound in the microfluidic cavity. Resonance in a dimension is obtained when the dimension is an integer number of half wavelengths, e.g., nλ/2.
Particles in the volume are subjected to a number of forces due to the standing acoustic wave. The primary axial force moves the particles to the node of the standing wave. The lateral component of the primary force retains the particles at the node. When the distance between particles is small, the secondary force aggregates the particles closely together.

The accumulation of the particles in the at least one first region may lead to the accumulation a majority of the fluid in at least one second region. Preferably the acoustic standing wave is configured to cause the particles in the volume to accumulate in a plurality of first regions. Accumulated may, but does not necessarily, encompass that the particles bind together. It is sufficient that the accumulated particles extend in the direction of the gravitational field in the at least one first region in order for the sedimentation of the particles to occur. Specifically, when the particles are gathered in the at least one first region the ratio of the combined area of the particles to the combined mass of the particles decreases, thus reducing resistance to sedimentation of the particles through the fluid in the volume.

The control circuit is operationally connected to the drive circuit and the pump. Operationally encompasses that the control circuit is connected, e.g., electrically, optically or wirelessly, to control the drive circuit and the pump and control the activation and deactivation of the drive circuit and the pump. The control circuit may additionally be operationally connected and configured to control one or more of frequency and power of the drive circuit, and flowrate of the pump.
In the acoustofluidic system, the control circuit activates the drive circuit, which actuates the ultrasound transducer, for subjecting the volume to the acoustic standing wave.

The second time period may have the same duration as the first time period described above. The second time period is preferably configured so as to correspond to the time needed for the accumulated particles to sediment throughout the volume so as the reach the boundary between the volume and the remaining sample that has not yet been subjected to the acoustic standing wave. The second time period may depend on the minimum, mean or maximum size of the accumulated particles and the density of the particles relative to the fluid. The second time period may thus depend on the extent to which the particles are accumulated during the first time period.

The gravitational field is preferably a planetary gravitational field, such as Earth's gravity. However, the method and system may be used with any type of gravitational field, such as due to centripetal force.
Generally, when the method and system are used within a gravitational field, the volume of the sample is subjected to the gravitational field in all steps (i) to (iii). However, the acoustic standing wave generally causes the particles to accumulate in the first region despite the effect of the gravitational field on the particles and the fluid. In other words, the acoustic force on the particles from the acoustic standing wave is generally stronger than the gravitational force (e.g., gravity) on the particles.
Thus, whereas it is contemplated that substep (a) could be performed at the same time as substep (b), e.g., if the acoustic force on the particles is weaker than the gravitational force during substep (b), it is preferred that the volume is not subjected to the acoustic standing wave during substep (b). In the acoustofluidic system, the control circuit therefore deactivates the drive circuit, or at least decreases the amplitude of the drive signal, which deactuates the ultrasound transducer, for subjecting the volume to the gravitational field.

The gravitational field in substep (b) affects both the particles and the fluid. The difference in density between the accumulated particles and the fluid will determine whether the accumulated particles sediment in the direction of the gravitational field, or in the direction opposite to the direction of the gravitational field.

The particles are removed from the volume when the accumulated particles have sedimented through the volume and reached the boundary or interface between the volume and the remaining sample that has not yet been subjected to the acoustic standing wave.
Depending on the extent of the accumulation in substep (a) and the duration of the second time period and the length though the volume that the accumulated particles need to sediment, more or less of the particles are removed from the volume. Accordingly, removing particles need not encompass that all of the particles are removed from the volume in substep (b). Typically, at least 50%, such as at least 60%, preferably at least 75% more preferably at least 90% of the particles initially present in the volume are removed in substep (b). The removal of particles may vary for different types of particles differing for example in dimensions and/or density.

The volume, i.e., the volume subjected to substeps (a) and (b) is moved in a second direction opposite the first direction.
In the acoustofluidic system, the control circuit activates the pump for moving the volume in the second direction opposite the first direction.
As the particles sediment in the first direction, the movement of the volume in the second direction ensure that particles in the sample do not return to the volume that has been subjected to the substeps (a) and (b). In other words, the sedimented particles do not again enter the volume. Introducing a subsequent volume of the sample may be effected using a pump, e.g., as described for introducing the volume of the sample in step (i).
The subsequent volume of the sample introduced into the accumulation zone of the microfluidic cavity in step (iii) preferably has the same volume as the volume introduced in step (i) and as the volume subjected to the acoustic standing wave in substep (a).
If the subsequent volume is smaller, then substep (a) and (b) will be performed more than one time in parts of the volume (as the full volume subjected to the acoustic standing wave and gravitational field in step (ii) is not fully moved out of the accumulation zone of the microfluidic cavity in which the subsequent volume of the sample is subjected to the acoustic standing wave. This leads to a slower production of fluid but less remaining particles in the fluid.

If the subsequent volume is larger, then parts of the subsequent volume may be moved past the accumulation zone of the microfluidic cavity in which the subsequent volume of the sample is subjected to the acoustic standing wave without having been subjected to step (ii). This leads to a faster production of fluid but with more remaining particles in the fluid.

Preferably steps (ii) and (iii) are repeated for successive volumes of the sample to thereby obtain successive volumes, i.e., successive volumes of fluid, having a lower concentration of particles than the sample, such successive volume preferably being substantially free of particles.
By repeating steps (ii) and (iii) successive volumes of the sample are introduced into the accumulation zone of the microfluidic cavity, thus resulting in the production of successive volumes having a lower concentration of particles than the sample, which volumes are displaced out of the accumulation zone and out of the microfluidic cavity through the outlet so that they can be collected, e.g., for later analysis. In this way fluid is produced from the sample of the suspension. Preferably the successive volumes (of fluid) are substantially free of particles. Substantially free may encompass a reduction of concentration of particles, compared to the sample, of at least 90%, such as at least 95%, preferably at least 99%, more preferably at least 99.5%. Substantially free of particles applies to at least one type of particle in the sample. Preferably, substantially free of particles applies to all types of particles in the sample.
The later analysis may comprise a measurement or optical observation or interrogation of the fluid. Optical measurements include absorbance measurements, fluorescence measurements, Raman spectroscopy, chemiluminescence and scattering. Electrical measurements include electrical impedance (spectroscopy) measurements, electrochemical measurements, voltammetry, conductivity.
The optical measurement may for example comprise an absorbance measurement for the determination of the concentration of free hemoglobin in plasma.

The later analysis may alternatively comprise an ELISA test for detecting antibodies or antigens.

Preferably step (ii) comprises performing substeps (a) and (b) a plurality of times.
This leads to an increased accumulation of the particles, which results in an increase in the number of particles that are accumulated. As more of the particles are accumulated, more of the particles will sediment and/or the accumulated particles will sediment faster, thereby decreasing the number of particles remaining in the volume after step (ii). Accordingly, this increased accumulation of the particles results in a higher purity of the produced fluid.

Preferably substep (b) comprises subjecting the volume to a plurality of acoustic standing waves corresponding to different resonance frequencies.
As the particles in the suspension are accumulated in first regions in which the acoustic standing wave has nodes, the number of nodes and hence the distance between the particles and the nodes affect the rate at which particles are accumulated. By subjecting the volume to a plurality of acoustic standing waves a plurality of nodes are present spatially in the volume, thus increasing the efficiency of accumulating particles.

Additionally, or alternatively, substep (b) may comprise subjecting the volume to a plurality of acoustic standing waves in different dimensions of the microfluidic cavity.
Similar to the above, an increased number of acoustic standing waves, resulting in a plurality of nodes present spatially in the volume, provides an increased efficiency in accumulating particles.

A single ultrasound transducer may be used to produce the plurality of acoustic standing waves simultaneously, or preferably, sequentially.
A single ultrasound transducer may be activated with different drive signals sequentially. Alternatively, the single ultrasound transducer may be activated using a drive signal comprising multiple frequencies. Further alternatively, the dimensions of the microfluidic cavity and/or the dimensions of the ultrasound transducer, may be selected so that a single drive signal results in the plurality of acoustic standing waves.

Alternatively, a plurality of ultrasound transducers may be used to produce the plurality of acoustic standing waves sequentially, or preferably, simultaneously.
Using a plurality, such as two, ultrasound transducers allow for providing a plurality of acoustic standing waves simultaneously, thus increasing the efficiency of accumulation of particles.

Preferably the microfluidic cavity initially, prior to step (i), contains a gas or a fluid that is immiscible with the sample.
This is advantageous in that it prevents dilution of the produced fluid. Thus, instead of preceding the volume of the sample with a buffer liquid or washing liquid as is generally used between samples in microfluidic systems, the technology proposed herein advantageously instead provides a gas or a fluid that is immiscible with the sample in the microfluidic cavity prior to the introduction of the volume of the sample, thus forming an interface between the volume and the gas or fluid. Typically, the gas or fluid is air.

Preferably the surface of the microfluidic cavity is configured to provide a controlled surface energy, such as by being silanized.
This is advantageous in that is helps facilitate a reliable and regular flow profile of the volume, thus decreasing the risk that movement of the successive volumes through the microfluidic cavity disrupts the interface between the produced fluid particles and the remaining sample.
The surface of the microfluidic cavity corresponds to surface of the inner walls of the microfluidic cavity.
A controlled surface energy encompasses a uniform surface energy over the surface of the microfluidic cavity. The surface may for example be silanized so as to provide a controlled and/or uniform surface energy.
The surface may for example be made hydrophobic in order to configure the surface with a controlled and/or uniform surface energy.

The particles of the sample may have a higher density than the fluid whereby the microfluidic cavity is oriented so that the first direction is aligned with the direction of the gravitational field,
or alternatively, the particles of the sample may have a lower density than the fluid whereby the microfluidic cavity is oriented so that the first direction is oppositely aligned with the direction of the gravitational field.
Preferably, the particles have a higher density than the fluid. This for example generally the case when the suspension comprises blood, whereby the particles comprise inter alia red and white blood cells as well as platelets. For such suspensions, the microfluidic cavity is arranged such that the first direction, i.e., the direction of sedimentation of the particles, is aligned with the direction of the gravitational field, e.g., downwards. Accordingly, the volume of the sample is introduced into the accumulation zone of the microfluidic cavity along the second direction, e.g., upwards.
However, the method can also be used for sedimentation of particles lighter than the fluid they are suspended in. In this case the microfluidic cavity is arranged such that the first direction, i.e., the direction of sedimentation, i.e., flotation, of the particles, is oppositely aligned with the direction of the gravitational field, e.g., upwards. Accordingly, the volume of the sample is introduced into the accumulation zone of the microfluidic cavity along the second direction, e.g., downwards.
Generally, the method may be more efficient when handling suspension in which the particles are heavier than the fluid, as the opposite arrangement requires that the microfluidic cavity is sufficiently narrow that the introduced volume of the sample does not spontaneously flow through the microfluidic cavity due to the gravitational field.

Preferably the method further comprises the step of:
(iv) subjecting the volume to a further acoustic standing wave configured to trap and retain any remaining particles in the volume as the volume is moved in the second direction.
This is advantageous in that it allows the number of remaining particles in the volume to be decreased. Generally, a significant number of particles in the volume of the sample is removed from the volume during substeps (a) and (b). As shown in example 4, plasma produced according to the method is suitable for later analysis. However, in order to further decrease the number of particles the produced fluid can be subjected, preferably within the microfluidic cavity, to a further acoustic standing wave as shown in Example 5. This further acoustic standing wave is preferably provided from the time that the volume reaches a trapping zone, i.e. a part of the microfluidic cavity in which the further acoustic standing wave is provided, until the time that the desired volume of fluid has been produced and passed through the part of the microfluidic cavity in which the further acoustic standing wave is provided. The further acoustic standing wave may however alternatively be provided in a further microfluidic cavity or fluid conduit through which the fluid produced in substeps (A) and (b) is led.
Step (iv) is preferably performed during step (iii).

Preferably substep (a) comprises adjusting the frequency of the acoustic standing wave dependent on the composition of the volume subjected to the acoustic standing wave.
This is advantageous in that the resonance frequency of the acoustic standing wave may vary dependent on the composition of the volume. Specifically, as the method involves sedimentation and removal of particles out of the volume subjected to the acoustic standing wave, these particles generally end up in bulk of the sample, more specifically in the next volume to be introduced into the microfluidic cavity. Accordingly, the number and concentration of particles in each subsequent volume introduced into the accumulation zone of the microfluidic cavity successively increases during progress of the method, thereby leading to changes in speed of sound in the volume, thus leading to the resonance frequency changing.

The frequency may be adjusted by tracking the frequency. This is preferably done electrically by measuring the impedance and/or power input to the ultrasound transducer as the ultrasound transducer is driven over a range of frequencies covering the expected resonance frequency. Generally, the frequency where the impedance and/or power is greatest corresponds to the resonance frequency.
Alternatively, the microfluidic cavity may be observed optically to determine the composition of the volume, and adjust the frequency therefrom.

It is further contemplated that step (i) and (iii) may comprise continuously introducing the sample into the accumulation zone of the microfluidic cavity along the second direction.
In this embodiment each volume of the sample is slowly introduced into the accumulation zone of the microfluidic cavity such that the speed of sedimentation of the particles accumulated in substep (a) is higher than the speed at which the volume passes through the accumulation zone in the direction from inlet to outlet. At such speeds, the particles sediment in the first direction faster than the volume is moved in the second direction, thereby resulting in removing particles from the volume.
In consideration of examples 1 and 2, a corresponding speed to be used in this embodiment may be at or below 1.5 mm per minute, corresponding to the interface between the volume and the air, i.e., the immiscible gas or fluid, moving at a speed of 1.5 mm/m along the length direction of the capillary used in examples 1 and 2.

In order to further automate the method and system, the acoustofluidic system may further comprise:
- a sensor configured to measure the extent or result of the sedimentation of the particles in the volume, and/or configured to measure the temperature of the volume, and wherein the control circuit is further connected to the sensor and configured to control the first time period and/or the second time period, and/or control the number of times that step (ii) is performed, and/or control the amplitude and/or frequency of the acoustic standing wave, based on the extent or result of the sedimentation of the particles in the volume and/or the temperature of the volume.
This is advantageous in that it provides for limiting the first and/or second time period, and/or the number of times that step (ii) is provided, when it is measured that a desired extent or result of the sedimentation of the particles in the volume has been achieved. The measuring of the extent or result of the sedimentation of the particles in the volume by the sensor may further be used to determine when step (iii) should be performed, i.e., when the subsequent volume is to be introduced into the microfluidic cavity, and/or determine whether also step (iv) should be performed to further reduce the number or concentration of any remaining particles in the volume.
The control circuit can be configured according to one or more of the following:
A. If a desired extent or result of the sedimentation of the particles in the volume has not been obtained:
   - increase one or more of the first time period, the second time period, the number of times that step (ii) is performed and the amplitude, or alternatively, adjust the frequency.
B. If the temperature exceeds a desired temperature:
   - increase the second time period, and/or decrease the amplitude.
C. As the temperature varies:
   - adjust the frequency.

### Brief description of the drawings and detailed description

A more complete understanding of the abovementioned and other features and advantages of the technology proposed herein will be apparent from the following detailed description of preferred embodiments in conjunction with the appended schematic drawings, wherein:
- Fig. 1A: shows an embodiment of the acoustofluidic system according to second aspect of the technology proposed herein prior to performing an embodiment of the method according to the first aspect of the technology proposed herein.
- Fig. 1B: shows the acoustofluidic system after performing the first step (i) of the method.
- Fig. 1C: shows the acoustofluidic system as substep (a) of step (ii) is being performed.
- Fig. 1D: shows the acoustofluidic system after substep b of step (ii) has been performed.
- Fig. 1E: shows the acoustofluidic system after step (iii) has been performed.
- Fig. 1F: shows the acoustofluidic system after steps (ii) and (iii) have been performed a plurality of times.
- Fig. 2A: shows an alternative embodiment of the acoustofluidic system after performing the first step (i) of the method.
- Fig. 2B: shows the alternative acoustofluidic system as substep (a) of step (ii) is being performed.
- Fig. 2C: shows the alternative acoustofluidic system after substep b of step (ii) has been performed.
- Fig. 3: shows an alternative pump and container.
- Fig. 4: shows a flowsheet of the method.
- Fig. 5: shows a further embodiment of the acoustofluidic system according to second aspect of the technology proposed herein for performing a further embodiment of the method according to the first aspect of the technology proposed herein.

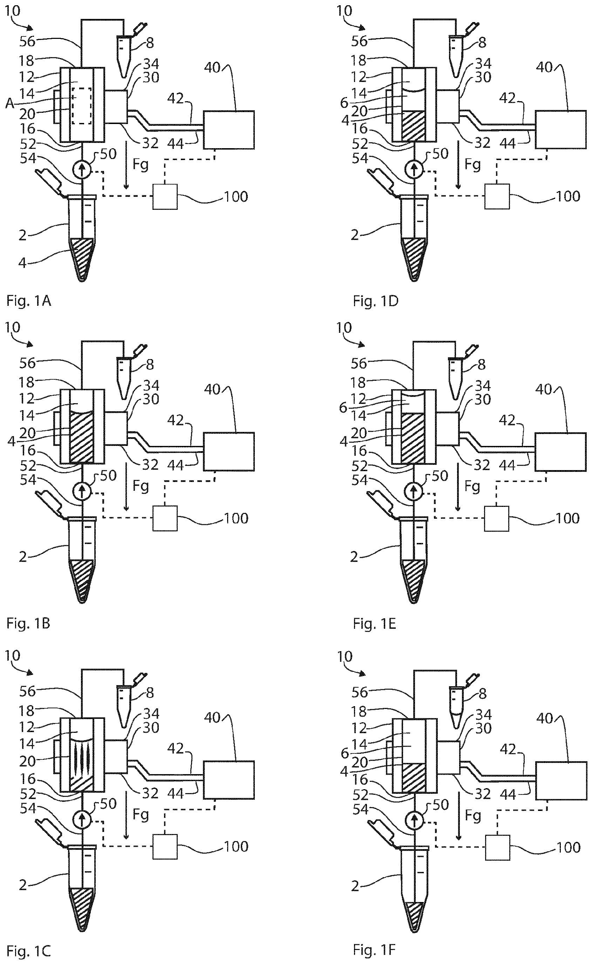

Fig. 1A shows an embodiment of the acoustofluidic system 10 according to second aspect of the technology proposed herein prior to performing an embodiment of the method according to the first aspect of the technology proposed herein.
Specifically, acoustofluidic system 10 comprises a substrate 12, here shown as a capillary, comprising a microfluidic cavity 14, here shown as a microfluidic channel 14. The capillary 12 and channel 14 has an inlet 16 and an oppositely provided outlet 18 as well as a channel wall 20. An ultrasound transducer 30 having a lower edge 32 and an upper edge 34 is positioned in contact with the capillary 12, for example by being glued thereto. An accumulation zone is designated the letter A and shown as a dashed line rectangle. The accumulation zone A corresponds to the part of the channel 14 in which the ultrasound transducer 30 provides the acoustic standing wave and extends along the channel 14 from the lower edge 32 to the upper edge 34 of the ultrasound transducer 30 so as to correspond to acoustic standing waves in the width and height(thickness) direction microfluidic channel 14. A drive circuit 40 is electrically connected to the ultrasound transducer 30 via leads 42 and 44. A pump 50 is connected to the inlet 16 via tubing 52 and to a container 2 containing whole blood 4, representing a suspension comprising particles and a fluid, via tubing 54. A further tubing 56 is connected to the outlet 18 for leading produced plasma 6 to a collection container 8. A control circuit 100 is further provided connected to the drive circuit 40 and the pump 50. The direction of the gravitational field is also shown indicated by the arrow Fg aligned with the vertical length of the channel 14. Preferably the channel 14 is initially filled with air or other fluid that is immiscible with the whole blood 4.

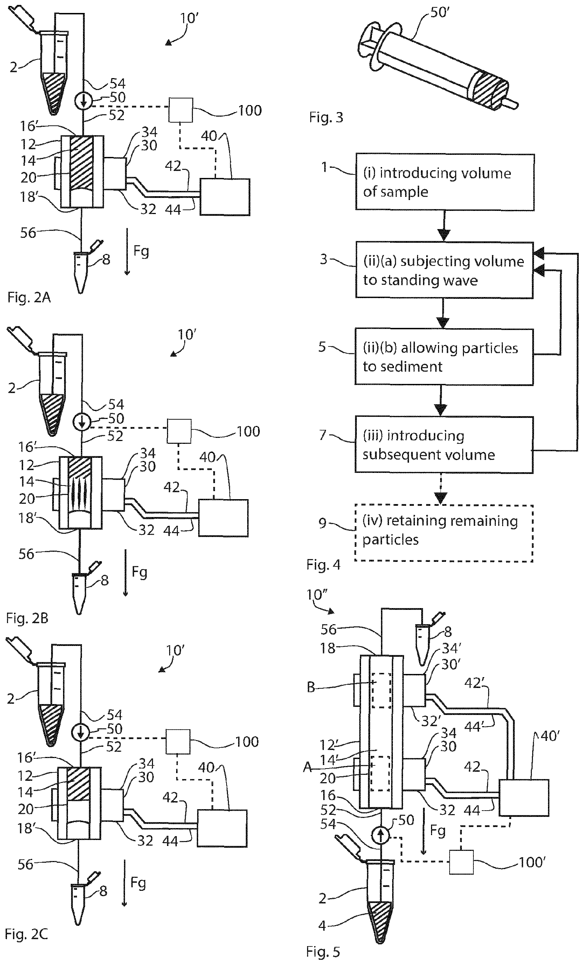

Fig. 1B shows the acoustofluidic system after performing the first step (i) of the method, see also fig 4 wherein the first step is designated 1. Accordingly, here a first volume of whole blood 4 has been introduced into the accumulation zone A (only shown in Fig. 1A) of the channel 14 by the pump 50 under control of the control circuit 100. As shown here, the whole blood 4 is introduced until the interface between whole blood 4 and the air that is displaced by the whole blood is positioned adjacent the upper edge 34 of the ultrasound transducer. This ensures that the whole accumulation zone A is filled with the volume.

Fig. 1C shows the acoustofluidic system 10 as substep (a) of step (ii) of the method is being performed, see also fig. 4 wherein this step is designated the reference numeral 3. In this substep the control circuit 100 activates the drive circuit 40 for a first time period. This activation causes the ultrasound transducer 30 to vibrate according to a drive signal provided by drive circuit 40. The frequency of the drive signal is adapted so as to give rise to an acoustic standing wave in the channel 14. This acoustic standing wave affects the particles in the fluid, i.e., the blood cells in the whole blood 4 causing them to accumulate at the nodes of the acoustic standing wave. Preferably, as shown, the frequency is chosen so that the standing wave has a number of nodes in which blood cells accumulate as vertically oriented columns spaced apart in the width dimension of the channel 14. In Fig. 1C the acoustic standing wave is present in the accumulation zone A of the channel 14 corresponding to the extent to which the ultrasound transducer 30 contacts the substrate or capillary 12, i.e., in the part of the channel 14 extending from the lower edge 32 to the upper edge 34 of the ultrasound transducer 30. The acoustic standing wave thus extends in the width dimension of the channel 14, i.e., perpendicularly to the first and second directions. Depending on frequency and dimensions of the channel 14, one or more acoustic standing waves may alternatively or additionally extend in the length dimension of the channel 14, i.e., along the first and second directions, and/or in the height dimension of the channel 14, i.e., perpendicularly to the length and width dimension of the channel 14 thus resulting in a larges accumulation zone.

As shown in Fig. 4, following substep (a) of step (ii), the particles, i.e., the blood cells, are allowed to sediment in substep (b) of step (ii) as illustrated by reference numeral 5 in Fig. 4. Substep (b) is carried out in the acoustofluidic system 10 when the control circuit 100 deactivates the drive circuit 40 during a second time period. The accumulated blood cells are then allowed to sediment downwards in a first direction along the direction of the gravitational field Fg, leaving behind a plasma volume substantially free of blood cells. Accordingly, Fig. 1D shows the acoustofluidic system 10 after substep (b) of step (ii) has been performed and a first volume of plasma, i.e., fluid substantially free of particles, has been formed.

In order to produce more plasma, further whole blood needs to be subjected to the acoustic standing wave. Accordingly, in step (iii), designated the reference numeral 7 in Fig. 4, the volume of produced plasma is moved upwards, i.e., in a second direction opposite to the direction of the gravitational field Fg, by introducing a subsequent volume of the whole blood 4 into the accumulation zone A of the channel 14. Accordingly, Fig. 1E shows the acoustofluidic system after step (iii) has been performed. The volume of plasma has now been moved upwards towards the outlet 18 and a subsequent volume of whole blood 4 is positioned in the channel 14 adjacent to the ultrasound transducer 30.

By repeating steps (ii) and (iii), as shown in Fig. 4, subsequent volumes of whole blood are introduced into the channel 14, subjected to the acoustic standing wave for accumulating the blood cells therein, which blood cells are then allowed to sediment, for producing subsequent volumes of plasma, e.g., fluid substantially free of particles.
Fig. 1F thus shows the acoustofluidic system 10 after step (ii), see Fig. 1C and 1D, and step (iii), see Fig. 1E, have been performed a plurality of times. As shown, a significant amount of plasma 6, obtained from the successive volumes of whole blood subjected to the standing wave and thereafter allowed to sediment, has been produced and led through tubing 56 to the collection container 8. The plasma 6 can then be used for assays or further processes that require plasma.

As shown in Fig. 4, substeps (a) and (b) of step (ii) can be repeated to further accumulate the blood cells so as to decrease the number of blood cells in the produced plasma 6. This increases the purity of the produced plasma, i.e., the produced fluid substantially free of particles.
In the method shown in Fig. 1A-1F the whole blood 4 represents a suspension comprising particles and a fluid, wherein the particles have a higher density than the fluid.
As shown in Fig. 2A-2C, the method may also be used with a suspension 4' comprising particles and a fluid 6', wherein the particles have a lower density than the fluid. In order to perform sedimentation in such a suspension the suspension is introduced in the direction of the gravitational force, i.e., from above through inlet 16' via tubing 52, and the produced fluid is discharged through the lower outlet 18'.
Accordingly, Fig. 2A shows an alternative embodiment 10' of the acoustofluidic system after performing the first step (i) of the method. In the acoustofluidic system 10' the inlet 16' and outlet 18' have been rearranged as described above so that the inlet is positioned above the outlet with regard to the direction of the gravitational field Fg.
Fig. 2A thus shows the acoustofluidic system 10' after performing the first step (i). Fig 2A thus corresponds to the situation shown for the acoustofluidic system 10 in Fig. 1B.
In Fig. 2A the suspension has been introduced into the channel 14 from above.

Fig. 2B shows the acoustofluidic system 10' as substep (a) of step (ii) is being performed. This figure thus corresponds to the situation shown for the acoustofluidic system 10 in Fig. 1C.
Fig. 2C shows the alternative acoustofluidic system after substep b of step (ii) has been performed. Here, accumulated particles have sedimented upwards leaving a volume of fluid substantially free from particles at the bottom of the channel 14. By introducing subsequent volumes of the sample from above into the channel 14, and performing substeps (a) and (b), the produced plasma 6 is sequentially forced out of the outlet 18' into the collection container 8.

In Figs 1A-1F and 2A-C a pump 5 is used to pump whole blood 4 and suspension 4' respectively from a container 2 into the channel 14. Alternatively, the container 2, the tubing 54 and the pump 50 can be replaced by a syringe 50' configured to both hold and pump the whole blood 4 and suspension 4', respectively.

In order to further improve the purity of the fluid substantially free of particles produced, a second ultrasound transducer can be used to trap and retain any remaining particles.

Fig. 5 accordingly shows a further embodiment 10'' of the acoustofluidic system according to second aspect of the technology proposed herein for performing a further embodiment of the method according to the first aspect of the technology proposed herein.
In the acoustofluidic system 10'' the substrate 12' and channel 14' are shown longer so as to accommodate the positioning of a further ultrasound transducer 30' having lower and upper edges 32' and 34', and being positioned above the ultrasound transducer 30. The further ultrasound transducer 30' is connected to the modified drive circuit 40' via leads 42' and 44'.
Modified control circuit 100' is configured to cause the drive circuit 40' to activate the further ultrasound transducer 30' continuously when the produced plasma 6 or fluid 6' reaches the further ultrasound transducer 30'. The produced plasma 6 or fluid 6' is thus subjected to a further acoustic standing wave in a trapping zone designated B as it reaches and passes the position in the channel 14' corresponding to the position of the further ultrasound transducer 30'. Any remaining particles or blood cells, which were not sedimented in the accumulation zone B at the position of the ultrasound transducer 30 in the preceding steps of the method, are to a large extent trapped and retained in this optional step (iv) of the method, see Fig. 4, by the acoustic standing wave caused by the further ultrasound transducer 30', thereby further decreasing the number of particles in the fluid or plasma exiting the outlet 18.

### Example 1: Acoustically enhanced sedimentation using standing wave at 4 MHz

This example shows acoustically enhanced sedimentation of whole blood using an acoustic standing wave at 4 MHz in order to produce plasma.

The acoustofluidic device used comprised a substrate in the form of a rectangular borosilicate capillary having an internal volume of 55 µl, a length of 25 mm, and a cross-sectional area of 2 x 1.1 mm². The inner surface of the capillary was treated with a silanizing reagent (Sigmacote^{®}, a solution of a chlorinated organopolysiloxane in heptane from SigmaAldrich). Sigmacote forms a thin covalently bonded hydrophobic film, useful for repelling water, retarding of blood clotting, and prevention of surface absorption of many basic proteins. The capillary was in contact with a piezoelectric ultrasound transducer having an internal resonance at 4 MHz. The ultrasound transducer was positioned so as to contact the central portion of the capillary. A function generator was electrically connected to the ultrasound transducer.

The capillary was arranged vertically and a syringe containing whole blood was attached to the lower end of the capillary using PTFE tubing. The upper end of the capillary was fluidly connected to a test tube for collecting produced plasma via PTFE tubing.

The method was carried out as follows.
i. The capillary was initially empty of blood and filled with air. Whole blood was introduced into the capillary using the syringe until the blood displaced the blood/air interface to a position in the capillary adjacent the upper end of the ultrasound transducer. A volume of the blood was thus introduced the accumulation zone of the capillary.
ii. One or more cycles of the following substeps were then performed:
   a. during a first time period of 30 seconds, the ultrasound transducer was activated using the function generator. Blood cells in the whole blood accumulated in several radially arranged longitudinal bands in the capillary during the first time period.
   b. during a second time period the ultrasound transducer was inactivated allowing the accumulated red blood cells to sediment along the direction of the gravity field. The blood cells were thus allowed to sediment downwards leaving a volume of plasma substantially free of blood cells. The duration of the second time period was not fixed, rather the second time period was allowed to proceed until no or very little sedimentation could be observed, and a volume of plasma had formed. substeps (a) and (b) were repeated until a volume of plasma free from blood cells had formed.
iii. Once satisfied that a volume of plasma free from blood cells had formed, a subsequent volume of whole blood was introduced into the accumulation zone of the capillary using the syringe. This subsequent volume displaced the volume of plasma upwards, i.e., past the position of the ultrasound transducer, and into the PTFE tubing leading to the test tube for collecting the plasma.

Steps (ii) and (iii) were repeated for 50 minutes until a volume of about 12-20 µl had been produced.

It was noted that this example relied on a human operator observing the process and deciding how many times step (ii) should be carried out before performing step (iii). It was also noted that the time needed for producing the 12-20 µl plasma was rather long (50 min). Specifically, it was noted that progressively less plasma was formed after each instance of performing step (ii). This could have been due to the cell concentration in the whole blood fraction steadily increasing as it received more and more sedimented cells.

### Example 2: Acoustically enhanced sedimentation using standing waves at 4 MHz and 4.2 MHz

This example shows acoustically enhanced sedimentation of whole blood using acoustic standing waves at 4 MHz and 4.2 MHz in order to produce plasma.

In order to increase the production rate of plasma in relation to example 1, a more optimized protocol for carrying out the method was specified according to the following table:

| Time (s) | Operation |
|---|---|
| 00.00 | Step (i): Whole blood was introduced into the capillary until the blood/air interface was positioned at the upper edge of ultrasound transducer (Piezo) |
| 00.30 | Step (ii), Substep (a): |
| | Piezo on at 4.25 MHz |
| 01.00 | Substep (b): |
| | Piezo off and sedimentation |
| 01.30 | Step (ii), Substep (a): |
| | Piezo on at 4.25 MHz |
| 02.00 | Substep (b): |
| | Piezo off and sedimentation |
| 02.30 | Step (iii): |
| | Repositioning of blood/plasma interface to the middle of the piezo |
| 03.00 | Step (ii)(1) - Substep (a1): |
| | Piezo on 4.2 MHz |
| 03.30 | Substep (b1): |
| | Piezo off and sedimentation |
| 04.00 | Step (ii)(2) - substep (a2): |
| | Piezo on 4 MHz |
| 04.30 | Substep (b2): |
| | Piezo off and sedimentation |
| 05.00 | Step (iii): |
| | Repositioning of blood/plasma interface above piezo |
| 05.30 - 07.30 | 1st repeat of previous section = step (ii)(1), step (ii) (2) and step (3) |
| | (03:00-05:30) |
| 08.00 - 10.00 | 2nd repeat of previous section = step (ii)(1), step (ii) (2) and step (3) |
| | (03:00-05:30) |
| 10.30 - 12.30 | 3^{rd} repeat of previous section = step (ii)(1), step (ii)(2) and step (3) |
| | (03:00-05:30) |
| 13.00 | Step (ii), substep (a): |
| | Piezo on at 4 MHz |
| 13.30 | Substep (b): |
| | Piezo off and sedimentation |
| 15.00 | Experiment end and plasma extraction |
| 18-20 | All plasma extracted |

After carrying out the protocol, 15 minutes had passed and 12-20 µl plasma had been produced.

It was thus noted that the method according to example 2 produced plasma significantly faster than the method of example 1.

During the experiment, it was also noted that the resonance frequencies of the standing waves differed slightly depending on the content of particles in the volume subjected to the standing acoustic wave. Accordingly, for the 4.2 MHz standing acoustic wave it was noted that better accumulation and aggregation was obtained when 4.25 MHz was used in the first round of step (ii).

It was further investigated whether performing the method only at 4.2 (4.25) MHz would provide better results.

However, after conducting tests with only 4.2 MHz frequency, the result the same progressive decrease in sedimentation of cells as the 4 MHz technique exhibited (Example 1), although not as prominent.

Thus, by combining the 4 and 4.2 MHz frequencies the problem of stagnation in sedimentation was solved. The reason why the combination of the 4 and 4.2 MHz frequencies was more efficient in sedimenting cells appeared to relate to that the different frequencies gave rise to acoustic standing waves in different dimensions of the capillary. Specifically, the 4 MHz frequency formed standing waves where the cells were accumulated in thin lines parallel to the capillary, i.e., in the 2 mm width dimension of the channel. In contrast the 4.2 MHz frequency appeared to form standing waves where the cells were accumulated in discs spaced apart in the 1.1 mm height dimension of the channel. Whereas the initially accumulated cells after some time were rearranged into thin lines parallel to the capillary similar to the 4 MHz frequency, it appeared that the increased performance of the combination of 4 MHz and 4.2 MHz was due to these different standing waves the resulting mixing in the channel, thus providing a repeated and more thorough accumulation of the cells.

According to observations during the experiment, it would be possible to further optimize the protocol for carrying out the method. Specifically, it was noted that the steps of moving the subsequent volume of the sample into the microfluidic cavity, i.e., the step of repositioning the blood/plasma interface, could be performed fast, e.g., in 15 seconds.

Additionally, the produced plasma was extracted by a micropipette from the top of the tubing attached to the outlet of the capillary. This procedure could also be automated and made faster.

### Example 3: properties of plasma produced using the methods of example 1 and 2 determined using flow cytometry

In order to determine the quality of the plasma produced by all methods, the plasma concentration of erythrocytes (RBCs), leucocytes (WBCs), and thrombocytes (platelets) were measured using a flow cytometer (Guava easyCyte SL System, Austin, USA). Antibodies with conjugated fluorophores were used for target detection. Mouse anti-human CD61-PE (BD Biosciences) was used for detection of platelets in whole blood and plasma samples. Mouse anti-human CD45-PerCP (BD Biosciences) was used for detection of WBCs in whole blood and plasma samples. CD235a-APC (BD Biosciences) was used for detection of RBCs in plasma samples. No RBC cytometric count was made on whole blood as it contained too many cells/µL for a flow cytometric count to be reasonable. Instead, RBCs was counted as all viable cells that were not counted as platelets or WBCs.

All flow cytometry measurements on whole blood and plasma samples were carried out within 24-34 hours after blood had been drawn from the donor.

The results are shown in the following table:

| Donor/method | Cell type | Whole blood (cells/µl) | Plasma (cells/µl) |
|---|---|---|---|
| **Donor 1** | RBC | 4 160 000 ± 103 000 | 440 ± 47 |
| 4 MHz | Platelets | 86 200 ± 10 400 | 13 900 ± 12 400 |
| Example 1 | WBC | 6 440 ± 2 110 | 616 ± 198 |
| **Donor 2** | RBC | *160 000 ± 5900 | 836 ± 283 |
| 4/4.2 MHz | Platelets | 121 000 ± 3680 | 25 800 ± 10 900 |
| Example 2 | WBC | 4 970 ± 214 | 1 350 ± 468 |
| **Donor 3** | RBC | 3 970 000 ± 22 000 | 561 ± 45 |
| 4/4.2 MHz | Platelets | 171 000 ± 7000 | 79 100 ± 20 400 |
| Example 2 | WBC | 4 690 ± 697 | 1 670 ± 163 |
| **Donor 4** | RBC | 5 620 000 ± 33 700 | 1 660 ± 556 |
| 4/4.2 MHz | Platelets | 101 000 ± 2 380 | 33 900 ± 8 250 |
| Example 2 | WBC | 6 140 ± 937 | 982 ± 92 |

| | | | |
|---|---|---|---|
| * The concentration of RBC was abnormally low for donor 2. Consequently, RBC data from donor 2 was excluded from further analysis. | | | |

The average properties are shown in the following table:

| Method/Example | Removal of total cells | Removal of red blood cells | Removal of platelets | Removal of white blood cells |
|---|---|---|---|---|
| 4 MHz / Example 1 | 99.6% | 99.99% | 83.9% | 90.4% |
| 4.2/4 MHz /Example 2 | 98.7% ± 0.95% | 99.98% ± 0.35% | 66.3% ± 12.4% | 73.7% ± 9.84% |

Accordingly, the methods of example 2 provided plasma purified from red blood cells, platelets, and white blood cells by on average 98.7%, with up to 99.99% removal of red blood cells.

### Example 4: plasma quality test for plasma produced using the methods of example 1 and 2 determined using ELISA assay

In order to assess the quality of the plasma produced by the method of example 2, an ELISA sandwich test kit supplied by Abnova, Taiwan (supplier catalog number KA0287) was used. The kit tested for presence of antibodies to Hepatitis B surface antigen in human plasma. The ELISA test was performed on plasma obtained from blood from a previously vaccinated donor.

Specifically, blood from the donor was treated to produce plasma using either conventional centrifugation or using the method of example 2.

The plasma obtained from the respective method was then used as sample in the ELISA assay with the hypothesis that the plasma from the method of example 2 would contain few enough remaining blood cells so as to not interfere with the ELISA assay.

The result showed that both plasma obtained from centrifugation and the method of example 2 contained Hepatitis B antibodies. Specifically, the measured absorbance at 405 nm value for the plasma generated by the method of example 2 was within the range of absorbance measured obtained for the three samples of centrifuged plasma.

Accordingly, the plasma obtained by the method of example 2 had a sufficient quality, corresponding to a sufficiently low concentration of remaining blood cells, so as to be substitutable for plasma obtained by conventional centrifugation in analysis. Accordingly, plasma obtained according to the method of example 2, as well as plasma obtained by the method according to the method of example 1, which plasma had even lower concentrations of remaining blood cells, is useable for subsequent analysis.

### Example 5: Acoustically enhanced sedimentation using standing waves at 4 MHz and 4.2 MHz using two ultrasound transducers

In this example the protocol shown in Example 2 was initially used to produce 12-20 µl plasma. After plasma had been produced it was pumped out of the capillary while subjected to the 4.2 MHz acoustic standing wave from a further ultrasound transducer positioned above the ultrasound transducer used in Example 2. This further ultrasound transducer thus functioned as an acoustic filter trapping and retaining cells in the plasma that had not been accumulated and sedimented by the ultrasound transducer. The plasma concentrations (cells/µl) were shown in the following table:

| | |
|---|---|
| RBC | 368 ± 292 |
| Platelets | 33 984 ± 12 400 |
| WBC | 454 ± 10 |

As noted, this resulted in even lower amounts of cells, and especially lower amounts of white blood cells, in the produced plasma. The number of white blood cells in the plasma thus obtained was approximately half of the number of white blood cells obtained by the method of example 2, thus providing about 90% reduction compared to the 73% reduction of the method of example 2.

### Feasible modifications of the technology proposed herein

The technology proposed herein is not limited to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A method of performing acoustically enhanced sedimentation in a sample of a suspension comprising particles and a fluid, the method comprising the steps of:
i. introducing a volume of the sample into an accumulation zone of a microfluidic cavity;
ii. performing the substeps of:
a. during a first time period: subjecting the volume to an acoustic standing wave configured to cause the particles in the volume to accumulate in at least a first region of the volume;
b. during a second time period: subjecting the volume to a gravitational field affecting the particles and the fluid so that the particles accumulated in the at least one first region sediment in a first direction in relation to the direction of the gravitational field, thereby removing particles from the volume; and
iii. moving the volume in a second direction opposite the first direction by introducing a subsequent volume of the sample into the accumulation zone of the microfluidic cavity.

2. The method according to any preceding claim, wherein steps (ii) and (iii) are repeated for successive volumes of the sample to thereby obtain successive volumes having a lower concentration of particles than the sample, such successive volume preferably being substantially free of particles.

3. The method according to any preceding claim, wherein step (ii) comprises performing substeps (a) and (b) a plurality of times.

4. The method according to any preceding claim, wherein substep (b) comprises subjecting the volume to a plurality of acoustic standing waves corresponding to different resonance frequencies.

5. The method according to any preceding claim, wherein substep (b) comprises subjecting the volume to a plurality of acoustic standing waves in different dimensions of the microfluidic cavity.

6. The method according to any of the claims 4-5, wherein a single ultrasound transducer is used to produce the plurality of acoustic standing waves simultaneously, or preferably, sequentially.

7. The method according to any of the claims 4-5, wherein a plurality of ultrasound transducers are used to produce the plurality of acoustic standing waves sequentially, or preferably, simultaneously.

8. The method according to any preceding claim, wherein the microfluidic cavity initially, prior to step (i), contains a gas or a fluid that is immiscible with the sample.

9. The method according to any preceding claim, wherein the surface of the microfluidic cavity is configured to provide a controlled surface energy, such as by being silanized.

10. The method according to any preceding claim, wherein the particles of the sample have a higher density than the fluid and the microfluidic cavity is oriented so that the first direction is aligned with the direction of the gravitational field,
or alternatively, wherein the particles of the sample have a lower density than the fluid and the microfluidic cavity is oriented so that the first direction is oppositely aligned with the direction of the gravitational field.

11. The method according to any of the preceding claims, comprising the further step of:
(iv) subjecting the volume to a further acoustic standing wave configured to trap and retain any remaining particles in the volume as the volume is moved in the second direction.

12. The method according to any of the preceding claims, wherein substep (a) comprises adjusting the frequency of the acoustic standing wave dependent on the composition of the volume subjected to the acoustic standing wave.

13. The method according to any preceding claim, wherein step (i) and (iii) comprises continuously introducing the sample into the accumulation zone of the microfluidic cavity along the second direction.

14. An acoustofluidic system for performing acoustically enhanced sedimentation in a sample of a suspension comprising particles and a fluid, the system comprising:
- a substrate in which a microfluidic cavity is positioned, the microfluidic cavity having an inlet and an outlet arranged spaced apart relative the direction of the gravitational field,
- an ultrasound transducer in acoustic contact with at least a part of one surface of the substrate,
- a drive circuit operationally connected to the ultrasound transducer and configured to actuate the ultrasound transducer for providing an acoustic standing wave in the microfluidic cavity
- a pump fluidically connected to the inlet and configured to introduce a volume of the sample into the microfluidic cavity, and
- a control circuit operationally connected to the drive circuit and the pump, the control circuit being configured to:
i. activate the pump to introduce a volume of the sample into an accumulation zone of the microfluidic cavity;
ii. control the drive circuit so as to:
a. during a first time period: activate the drive circuit for subjecting the volume to an acoustic standing wave configured to cause the particles in the volume to accumulate in at least a first region of the volume;
b. during a second time period: de-activate the drive circuit for subjecting the volume to a gravitational field affecting the particles and the fluid so that the particles accumulated in the at least one first region sediment in a first direction in relation to the direction of the gravitational field, thereby removing particles from the volume; and
iii. activate the pump for moving the volume in a second direction opposite the first direction by introducing a subsequent volume of the sample into the accumulation zone of the microfluidic cavity.

15. The acoustofluidic system according to claim 14, wherein the system further comprises:
- a sensor configured to measure the extent or result of the sedimentation of the particles in the volume and/or the temperature of the volume,
and wherein the control circuit is further connected to the sensor and configured to control the first time period and/or the second time period, and/or control the number of times that step (ii) is performed, and/or control the amplitude and/or frequency of the acoustic standing wave, based on the extent or result of the sedimentation of the particles in the volume and/or the temperature of the volume.
